# EUROPÄISCHE PATENTSCHRIFT

(11) **EP 1 479 686 B1**
(45) Veröffentlichungstag und Bekanntmachung des Hinweises auf die Patenterteilung: **04.10.2006**
(21) Anmeldenummer: 04010778.1
(22) Anmeldetag: 06.05.2004
(51) Int. Cl.: C07F 5/02

(54) **Verfahren zur Herstellung von Anilinboronsäuren und ihren Derivaten**
Process for the preparation of aniline boronic acids and derivatives thereof
Procédé de préparation d'acide boronique anilinique et de ses derivés

(30) Priorität: 19.05.2003 DE 10322843
(43) Veröffentlichungstag der Anmeldung: 24.11.2004
(73) Patentinhaber: Archimica GmbH, 65929 Frankfurt am Main (DE)
(72) Erfinder: Meudt, Andreas, Dr., 65719 Hofheim (DE); Lehnemann, Bernd, Dr., 60326 Franfurt (DE); Scherer, Stefan, Dr., 64572 Büttelborn (DE); Kalinin, Alexei, Dr., Kingston ON, 7, KM 8Y5 (CA); Snieckus, Victor, Dr., Kingston ON, K7L 2G4 (CA)
(74) Vertreter: Schweitzer, Klaus

(56) Entgegenhaltungen:
- EP-A1- 1 052 252
- BAUDOIN, O. ET AL: "Palladium-Catalyzed Borylation of Ortho-substituted Phenyl Halides and Application to One-Pot synthesis of 2,2'Disubstituted Biphenyls" J. ORG. CHEM., Nr. 65, 2000, Seiten 9268-9271, XP002293549
- KOTHA S ET AL: "Recent applications of the Suzuki-Miyaura cross-coupling reaction in organic synthesis" TETRAHEDRON, ELSEVIER SCIENCE PUBLISHERS, AMSTERDAM, NL, Bd. 58, Nr. 48, 25. November 2002 (2002-11-25), Seiten 9633-9695, XP004393976 ISSN: 0040-4020

## Beschreibung

Die Erfindung betrifft ein Verfahren zur Herstellung von Anilinboronsäuren und ihren Estern und Salzen, wobei ein gegebenenfalls substituiertes Anilinderivat am Stickstoff durch Austausch aller Wasserstoffatome gegen eine oder mehrere Schutzgruppen geschützt und dann metalliert wird und dann mit einer geeigneten Borverbindung umgesetzt wird, wodurch je nach Aufarbeitung und Entfernung der Schutzgruppen die entsprechende Boronsäure, ihr Anhydrid oder ein Boronsäureester erhalten wird (GLEICHUNG 1).

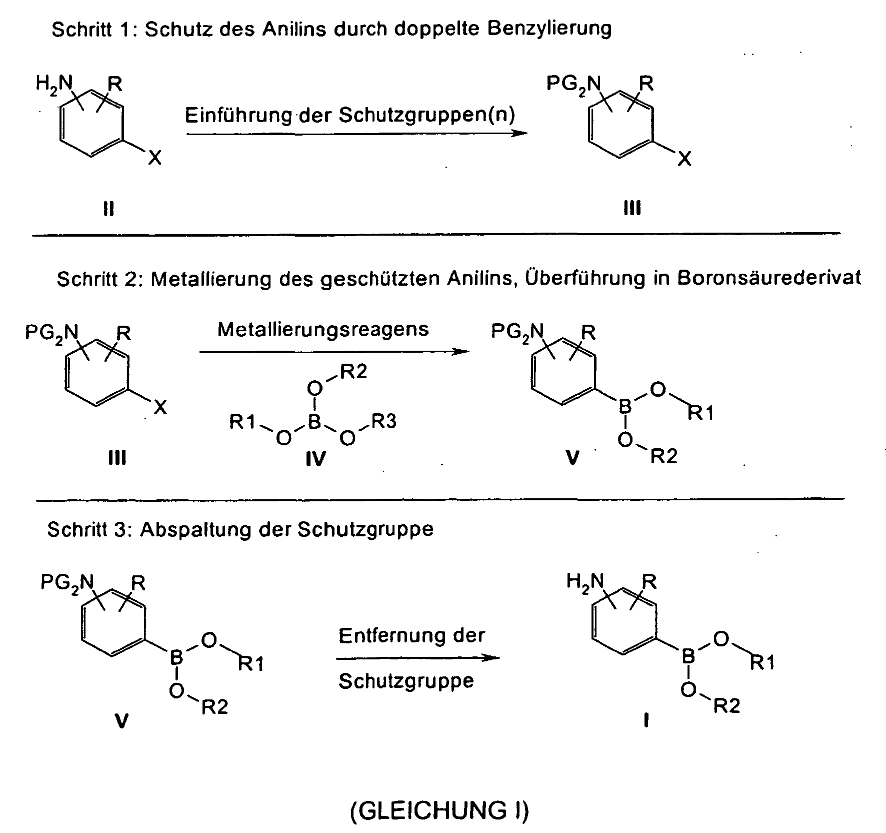

Die Anwendung übergangsmetallkatalysierter Reaktionen, insbesondere zur Knüpfung von Kohlenstoff-Kohlenstoff-Bindungen mit Palladium- oder Nickelkatalysatoren, hat in den letzten Jahren zunehmend Eingang in die industrielle Synthese von pharmazeutischen Wirkstoffen, Spezial- und Feinchemikalien gefunden, die sie häufig unter sehr milden Bedingungen und mit guten Chemoselektivitäten ablaufen. Dabei wird im allgemeinen ein Alkenyl-, Alkinyl-, Aryl- oder Heteroarylhalogenid mit einem Alken (Heck-Reaktion) oder einer metallorganischen Verbindung gekuppelt. Insbesondere mit klassischen Synthesemethoden nicht zugängliche, asymmetrisch substituierte Biphenyl-Derivate werden auf diese Weise hergestellt. Die dabei am häufigsten angewandte Methode ist die Suzuki- oder Suzuki-Miyaura-Kupplung, bei der Boronsäuren oder ihre Derivate, gelegentlich auch Alkylborane, als metallorganische Kupplungspartner eingesetzt werden. Aufgrund ihrer vergleichsweise geringen Reaktivität tolerieren diese Borverbindungen die Anwesenheit vieler funktioneller Gruppen im Molekül und lassen sich sogar in wässrigen Reaktionsmedien umsetzen. Ebenso ist ihre Toxizität niedrig gegenüber anderen vergleichbar reaktiven Metallorganylen, z.B. Organozinnverbindungen (Stille-Kupplung).

Organische Arylboronsäuren und ihre Derivate werden meist durch Umsetzung einer Aryllithium- oder -magnesium-Verbindung mit einem Borsäuretrialkylester und anschließender wässrig-saurer Hydrolyse hergestellt.
Dieser Syntheseweg lässt sich nicht direkt auf Anilinboronsäuren übertragen, da die beiden relativ aciden Wasserstoffatome der Aminogruppe die Herstellung einer organometallischen Verbindung des Anilins unmöglich machen. Ein einfacher Schutz der Aminogruppe, wie in der Peptidsynthese üblich, ist nicht ausreichend, da das zweite Wasserstoffatom noch reaktiv gegenüber polaren Organometallverbindungen ist.

Die Literatur zu diesem Thema beschreibt Versuche, die Aminogruppe in Phenylboronsäure einzuführen, indem die Boronsäure nitriert und die eingeführte Nitrogruppe reduziert wird. Dabei wird ein Isomerengemisch erzeugt, das je nach Reaktionsbedingungen hauptsächlich aus der ortho- oder der meta-Nitrophenylboronsäure (jeweils 60-70% Ausbeute) besteht; die para-Nitrophenylboronsäure konnte dabei nur in sehr geringen Mengen als Nebenprodukt gewonnen, aber nicht vollständig charakterisiert werden. Die ortho- und meta-Aminophenylboronsäuren wurden durch Reduktion der Nitroverbindungen, entweder mit Eisen(II)-Salzen oder Wasserstoff an Platin, in mittleren Ausbeuten dargestellt und als Carbonsäureanilide isoliert. (Seaman und Johnson, J. Am. Chem. Soc. 1931, 53, 713). Bei der Nitrierung wurde stets ein gewisser Anteil an Nitrobenzol und Borsäure erhalten, obwohl bei tiefen Temperaturen (bis -30°C, vgl. u.) gearbeitet wurde. In der Folgeveröffentlichung (Bean und Johnson, J. Am. Chem. Soc. 1932, 54, 4415) wurde dieser Verlust der Borgruppe sogar als ausschließliche Reaktion bei der Nitrierung von 4-Methoxyphenylboronsäure beschrieben. Auch hier scheiterte eine spätere Funktionalisierung von Phenylboronsäuren in para-Position vollständig. Die Empfindlichkeit der Bor-Kohlenstoff-Bindung in Aromaten gegen Elektrophile wurde von Kuivila und Hendrickson (J. Am. Chem. Soc. 1952, 74, 5068) durch Bromolyse von Phenylboronsäuren demonstriert. Dabei zeigte sich, dass elektronenarme Phenylboronsäuren stabiler waren als elektronenreiche, was später zur Synthese einiger elektronenziehend substituierter Boronsäuren genutzt wurde (Torssell, Meyer, Zacharias, Ark. Kemi 1957, 10, 35, 497). In derselben Veröffentlichung wird auch die Darstellung einer 4-Amino-3-nitrophenylboronsäure in einer vielstufigen Sequenz beschrieben, ausgehend von Tolylboronsäure. Dabei wurde bei tiefer Temperatur (-40°C) nitriert, die Methylgruppe zur Säure oxidiert, über das Säurechlorid ein Azid eingeführt, dieses durch Curtius-Reaktion zur Acetylamino-Gruppe abgebaut und diese verseift (14 % Gesamtausbeute).

Eine weitere Methode, Boronsäurederivate aufzubauen, besteht in der übergangsmetallkatalysierten Kupplung von Dioxaborolanen (vgl. Murata et al., J. Org. Chem. 2000, 65, 164) oder Dioxaborolanylen (vgl. Zaidlewicz et al., J. Organomet. Chem. 2002, 657, 129) mit Halogenaromaten. Diese Reaktion verläuft mit Haloanilinen mit 7% Ausbeute bislang jedoch nicht zufriedenstellend (Baudoin et al., J. Org. Chem. 2000, 65, 9268).

Ferner wäre die Einführung einer Boronsäurefunktion in eine aromatische Nitroverbindung mit folgender Hydrierung denkbar, aufgrund der Reaktivität der Nitrogruppe erfordert dies jedoch extrem tiefe Temperaturen und ist auf wenige Substrate beschränkt (vgl. Köbrich et al., Angew. Chem. 1966, 78, 1062; Knochel et al., Angew. Chem. 2002, 114, 1680).

Es bestand daher die Aufgabe, ein Verfahren zur Verfügung zu stellen, dass es erlaubt Anilinboronsäuren (Aminophenylboronsäuren) - vor allem auch solche, die die Aminogruppe in para-Stellung tragen - und ihre Derivate herzustellen, das mit vielen Substituenten und Substitutionsmustern kompatibel ist, weder vielstufige Synthesesequenzen noch technisch schwer beherrschbare Reaktionen wie den Curtius-Abbau umfasst, hohe Ausbeuten erzielt und ökonomisch sinnvoll ist. Dies ist die Voraussetzung für eine technische Herstellung und weitere Verwendbarkeit von Aminophenylboronsäuren.

Die vorliegende Erfindung erfüllt diese Ansprüche und betrifft ein Verfahren zur Herstellung von gegebenenfalls substituierten Anilinboronsäurederivaten der Formel (I) und ihren Derivaten 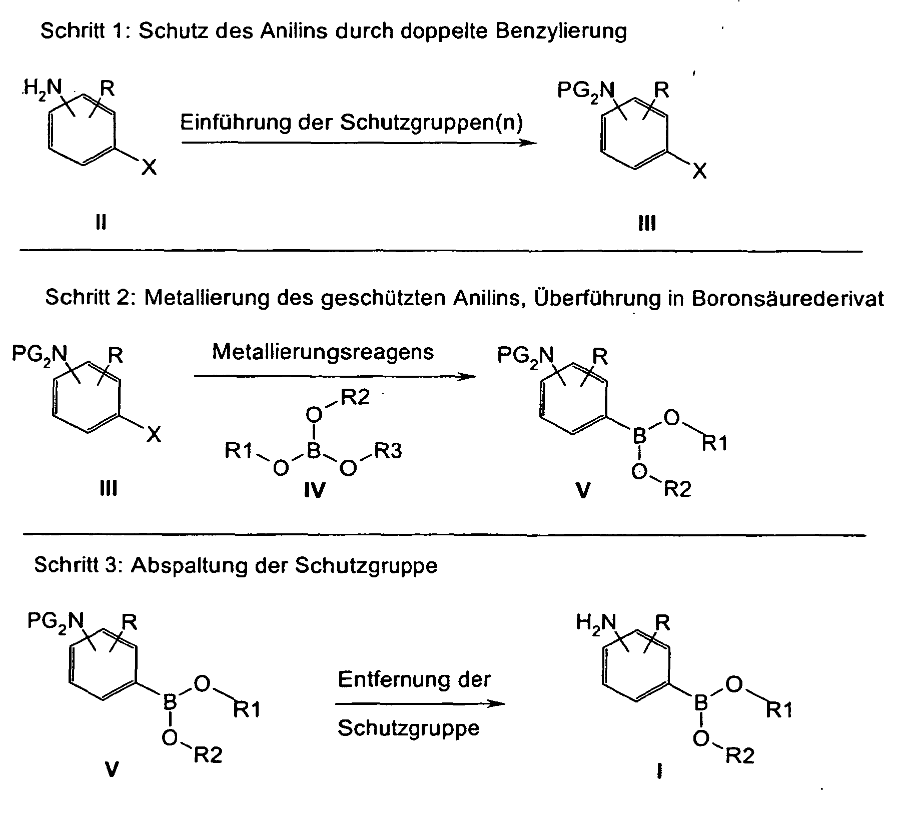 durch Überführung eines Anilins (II) durch Einführung von zwei Schutzgruppen PG in eindoppelt geschütztes Anilin (III), Metallierung von (III) und gleichzeitiger oder anschließender Umsetzung mit einem Boronsäureester B(OR^{1,2,3})₃ (IV) zu einem geschützten Aminophenylboronsäureester der Formel (V), der durch Abspaltung der Schutzgruppen PG in den Aminophenylboronsäureester der Formel (I) überführt wird,
wobei,
R für H, F, Cl, Br, l, einen verzweigten oder unverzweigten, gegebenenfalls substituierten C₁-C₂₀, insbesondere C₁-C₈-Alkyl- oder Alkoxyrest, einen gegebenenfalls substituierten C₆-C₁₂-Aryl- oder Aryloxyrest, insbesondere Phenyl, einen Heteroraryl- oder Heteroaryloxyrest, einen gegebenenfalls substituierten C₃-C₈-Cycloalkylrest, insbesondere Cyclohexyl, eine Dialkyl- oder Diarylaminogruppe, eine Alkyl- oder Arylthiogruppe oder eine Ester- oder Acetalgruppe steht;
X bedeutet H, Cl, Br, I oder F, insbesondere Cl oder Br;
R¹, R², R³ stehen unabhängig voneinander für H, eine verzweigte oder unverzweigte, gegebenenfalls substituierte C₁-C₂₀, insbesondere C₁-C₈-Alkylgruppe, wobei gegebenenfalls zwei Reste R¹⁻³ zusammen einem Ring bilden oder für weitere Reste B(OR)₃.

PG steht für eine Schutzgruppe, die unter den Bedingungen der Metallierung und Borylierung inert ist und sich ohne Verlust der borhaltigen Funktion aus (V) entfernen lässt, beispielsweise eine gegebenenfalls substituierte Benzyl-, 2,4-Dimethoxybenzyl-, Triorganosilyl-, insbesondere Trialkylsilyl-, tert-Butyloxycarbonyl-, Benzyloxycarbonyl-, Organosulfonyl- oder -carbamoyl-Gruppen, wobei auch zwei solcher Gruppen PG gemeinsam einen Ring bilden können, oder für ein trimeres 1,3,5-Tris-arylhexahydro-1,3,5-triazin, das sich formal als Kondensationsprodukt von drei Äquivalenten der Verbindung (II) mit Formaldehyd beschreiben lässt.

Allgemein unter den Verfahrensbedingungen einsetzbare Schutzgruppen PG sind dem Fachmann bekannt.

Durch Einführung der Schutzgruppe PG werden die N-ständigen Wasserstoffatome vollständig geschützt, so dass die Aminfunktion im anschließenden Metallierungsschritt nicht mehr angegriffen werden kann.

Die Einführung der Schutzgruppen PG kann beispielsweise durch Alkylierung des Anilin-Stickstoffatoms durch ein Alkylierungsmittel, gegebenenfalls unter Mitwirkung einer Base und/oder eines Katalysators, erfolgen oder durch reduktive Aminierung eines gegebenenfalls substituierten Benzaldehyds durch das Anilin (II) mit Hilfe eines Hydriddonors.

Bei der Verwendung von Carbamoyl- oder Acylgruppen als Schutzgruppen PG hat es sich als vorteilhaft erwiesen diese durch Acylierung des Anilin-Stickstoffatoms mittels reaktiver Carbonsäurederivate einzuführen, gegebenenfalls kann dies in Gegenwart eines Acylierungskatalysators oder unter Mitwirkung einer Base oder eines Alkalimetalls erfolgen.

Triorganosilylgruppen als Schutzgruppen werden vorzugsweise durch Umsetzung des Anilinderivats mit einem elektrophilen Silylierungsmittel eingeführt, gegebenenfalls erfolgt dies unter Mitwirkung einer Base oder eines Alkalimetalls.

X ist bevorzugt Chlor, Brom oder Iod, besonders bevorzugt Brom im Falle der Metallierung durch Halogen-Metall-Austausch, besonders bevorzugt Chlor im Falle der Lithiierung mit metallischen Lithium.
Als Metallierungsreagentien kommen beispielsweise Grignard-Verbindungen, Diorganomagnesiumverbindungen, Organolithiumverbindungen oder Triorganomagnesium-at-Komplexe in Betracht, sowie Alkalimetalldiorganoamide, Kombinationen aus Organolithiumverbindung und Komplexbildner, Kombinationen aus Organolithiumverbindung und Alkalimetallalkoholat, oder auch das reaktive Metall selbst, wie Alkali- und Erdalkalimetalle, insbesondere Natrium, Lithium, Magnesium oder auch Zink in geeigneter Form, gegebenenfalls in Gegenwart eines Redox-Katalysators.

Durch Metallierung von (III) werden Verbindungen der Formel (IIIa) erhalten wobei M für ein gegebenenfalls Liganden tragendes Alkali- oder Erdalkalimetall oder Zink, Cadmium oder Quecksilber steht.

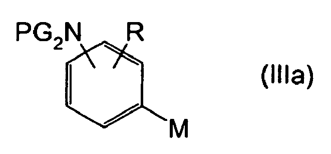

Als Metallierungsreagentien besonders bevorzugt sind sekundäre Grignard-Verbindungen wie Isopropyl-, Cyclohexyl- oder Cyclopentylmagnesiumhalogenide, und primäre oder sekundäre Alkyllithiumverbindungen wie Butyllithium, Hexyllithium oder Cyclohexyllithium oder metallisches Lithium in Gegenwart eines Katalysators.

Die so erhaltene metallierte Verbindung (IIIa) wird mit 0.6 bis 5 Stoffmengenäquivalenten, insbesondere 1 bis 4 Stoffmengenäquivalenten eines Triorganoborats der Formel 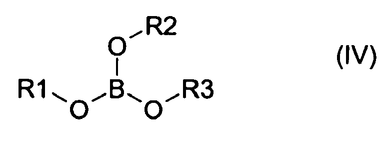 zu Verbindungen der Formel (V) umgesetzt. Die Reste R¹⁻³ haben hierbei die vorstehend genannte Bedeutung.
Bevorzugt sind die Reste R¹⁻³ Alkylreste, die insbesondere der Gruppe der linearen oder verzweigten niederen Alkane und Cycloalkane, vor allem Methyl, Ethyl, Propyl, Butyl, Isopropyl, Isobutyl, tert.-Butyl, Pentyl, Isopentyl, Neopentyl, Cyclopentyl, Hexyl, Isohexyl, Cyclohexyl, Cycloheptyl, Cyclooctyl usw. entstammen.

Anschließende Abspaltung der Schutzgruppen PG am Anilin-Stickstoffatom, beispielsweise durch Hydrolyse oder in einem nachgelagerten Reaktionsschritt führt zu den gewünschten Anilinboronsäurederivaten (I).

Zur Entfernung der Schutzgruppe kann eine beliebige Methode eingesetzt werden, die den anderen im Molekül enthaltenen Funktionen kompatibel ist, beispielsweise Hydrogenolyse oder Transferhydrogenolyse bei Benzylgruppen oder Benzyloxycarbonylgruppen, verdünnte Säure bei Silyl- oder Dimethoxybenzylgruppen, Fluorid bei Silylgruppen etc. Die Hydrogenolyse erfolgt vorzugsweise in einer wasserstoffhaltigen Atmosphäre in Gegenwart eines Übergangsmetallkatalysators, unter einem Druck von 0,5 bis 400, insbesondere 2 bis 200 bar.

Als Methode zur Entfernung von PG ist besonders bevorzugt die katalytische Hydrierung bei Benzylgruppen und Benzyloxycarbonylgruppen und die fluoridinduzierte Desilylierung bei Silylgruppen und die saure Spaltung bei Dimethoxybenzylgruppen und tert.-Butyloxycarbonylgruppen.

Weitere Methoden zur Abspaltung von PG sind die Transferhydrierung in Gegenwart eines Übergangsmetallkatalysators und eines geeigneten Hydriddonors oder die Umsetzung mit einer Brönsted- oder Lewis-Säure oder Brönstedbase.

Das erfindungsgemäße Verfahren wird in einem Lösungsmittel, bei Temperaturen im Bereich von -100 bis 120°C, vorzugsweise im Bereich von 0 bis 40°C durchgeführt. Die Temperatur liegt bei der Verwendung von Grignard-Verbindungen insbesondere im bevorzugten Bereich, bei der Verwendung von Organolithiumverbindungen vorzugsweise im Bereich von -100°C bis -30°C bei der Metallierung. Aufgrund der Feuchtigkeits- und Sauerstoffempfindlichkeit der metallorganischen Reagenzien und Intermediate wird die Reaktion bevorzugt unter einem trockenen Inertgas wie Stickstoff oder Argon durchgeführt.

Der Metallierungsschritt des erfindungsgemäßen Verfahrens wird in einem organischen Lösungsmittel oder Lösungsmittelgemischen durchgeführt, bevorzugt in einem aliphatischen, aromatischen oder etherischen Lösungsmittel oder Mischungen dieser Lösungsmittel, besonders bevorzugt in Lösungsmitteln oder Lösungsmittelgemischen, die mindestens ein Lösungsmittel ausgewählt aus der nachfolgenden Gruppe enthalten: Tetrahydrofuran, niedere Ether, Glyme, Diglyme, Toluol, Cyclohexan, Pentan, Hexan, Isohexan oder Heptan, Triethylamin, Dialkylether, insbesondere Diethylether, Di-n-propylether, Diisopropylether, Dibutylether, 2-Methyltetrahydrofuran, tert.-Butylmethylether, Benzol, Xylol, Anisol, Petrolether (Alkangemische), Methylcyclohexan.

Schützungs- und Entschützungsschritt werden entweder in Substanz oder einem geeigneten Lösungsmittel, beispielsweise aus der Reihe der vorstehend genannten Lösungsmittel- oder Lösungsmittelgemische durchgeführt.

In der bevorzugten Ausführungsform wird zunächst das Anilin (II) mit 1 bis 50 Äquivalenten einer Verbindung, die die Schutzgruppe PG überträgt, besonders bevorzugt mit 2 bis 2,2 Äquivalenten, in einem geeigneten Lösungsmittel, meist in Gegenwart von 1 bis 20 Äquivalenten einer geeigneten Base, umgesetzt. Die Aufarbeitung zur Isolierung von (II) geschieht in einer an die Empfindlichkeit der Schutzgruppen angepassten Weise.

In der bevorzugten Ausführungsform des zweiten Schrittes wird eine Grignard-Verbindung bei Raumtemperatur oder eine Alkyllithium-Verbindung bei tiefer Temperatur vorgelegt und das geschützte Haloanilin (III) langsam zudosiert, welches dabei durch Halogen-Metall-Austausch metalliert wird. Danach wird die entstandene Suspension mit dem Triorganoborsäureester versetzt und bis zur vollständigen Umsetzung gerührt, wobei gegebenenfalls die Temperatur erhöht wird. Ebenso kann die Verbindung (III) vorgelegt und die metallorganische Verbindung zudosiert werden.

In einer alternativen Ausführungsform als einschrittige Variante kann der Triorganoborsäureester B(OR¹⁻³)₃, der in diesem Fall bevorzugt sterisch anspruchsvolle Substituenten trägt, mit dem geschützten Haloanilin (III) vorgelegt und die Organometall-Verbindung zudosiert werden.

In einer weiteren alternativen Ausführungsform kann ein geschütztes Lithioanilin durch Deprotonierung eines Anilins (III) erzeugt werden, wozu im allgemeinen als Base entweder eine Alkyl- oder Aryllithiumverbindung, ein Lithiumamid (z.B. Lithiumdiisopropylamid) oder eine Kombination aus Organolithium-Verbindung und Komplexbildner (z.B. Butyllithium und N,N,N',N'-Tetramethylethylendiamin) oder eine Kombination aus Organolithiumverbindung und Alkalimetall-Alkoholat (z.B. Butyllithium und Kalium-tert.-butanolat) zum Einsatz kommen. Auch in diesem Fall ist es sowohl möglich, die metallorganische Base vorzulegen, als auch, die Verbindung (III) vorzulegen, als auch, eine Gemisch von Verbindung (lll) und B(OR¹⁻³)₃.

In einer weiteren alternativen Ausführungsform wird das geschützte Haloanilin (lll) mit einem reaktiven Metall, insbesondere Lithium oder Magnesium, gegebenenfalls in Gegenwart eines Katalysators, umgesetzt, um die reaktive metallierte Spezies zu erzeugen. Diese kann dann in einer der beschriebenen Arten und Weisen mit dem Triorganoborsäureester umgesetzt werden. Ebenso kann die direkte Metallierung von (III) in Gegenwart des Boronsäureesters erfolgen.

Die Aufarbeitung erfolgt im allgemeinen unter den üblichen wässrigen Bedingungen, wobei (V) entweder als Boronsäureester, Boronsäure oder Boronsäureanhydrid anfällt.

Die Abspaltung der Schutzgruppen, falls nicht während der Aufarbeitung des Boronsäurederivats bereits erfolgt, wird unter genau kontrollierten Bedingungen auf eine Weise durchgeführt, die mit den Funktionalitäten von (IV), insbesondere der Boronatgruppe, verträglich ist, d.h. möglichst wenig zu Protodeborierung führt. Gegebenenfalls kann das erhaltene Anilinboronsäurederivat (I) durch Umkristallisation weiter aufgereinigt werden oder als Salz, z.B. als Hydrochlorid, isoliert werden.

Die so erhaltenen Anilinboronsäurederivate, insbesondere Aminophenylboronsäuren, -ester und -anhydride lassen sich problemlos in Suzuki-Kupplungen einsetzen. Das Verfahren bietet erstmals einen einfachen, kostengünstigen Weg zur Synthese dieser Verbindungen in guten Ausbeuten.

Ein Vorteil des erfindungsgemäßen Verfahrens ist die gute Zugänglichkeit von Anilinboronsäurederivaten der Formel (I), insbesondere von 4-Aminophenylboronsäurederivaten, die nach den bekannten Verfahren nicht zugänglich sind. Ein weiterer Vorteil des erfindungsgemäßen Verfahrens liegt darin, dass die Einführung der Schutzgruppen meist keine teuren metallorganischen Basen wie z.B. Lithiumalkyle benötigt. Ein weiterer Vorteil liegt darin, dass die doppelt geschützte Aminogruppe gegenüber der Metallierung des aromatischen Rings in einem weiten Temperaturbereich inert ist, so dass auf kryogenische Bedingungen häufig verzichtet werden kann.

Das erfindungsgemäße Verfahren soll durch die nachfolgenden Beispiele erläutert werden, ohne die Erfindung darauf zu beschränken:

### Beispiel 1:

### 4-Aminophenylboronsäure durch Halogen-Metall-Austausch mittels Hexyllithium an N,N-Dibenzyl-4-bromanilin

Ein Gemisch von 17,2 g (100 mmol) 4-Bromanilin, 35,9 g (210 mmol) Benzylbromid und 16 g (151 mmol) Natriumcarbonat in 100 ml N,N-Dimethylformamid wurden 10 h bei 100-110°C gerührt und das Reaktionsgemisch in 400 ml Eiswasser gegossen. Die entstandene Fällung wurde abfiltriert, mit Wasser und kaltem Methanol gewaschen und im Vakuum getrocknet. Ausbeute an 4-Brom-N,N-dibenzylanilin: 32,37 g (91,9 mmol, 92 %)
Eine Lösung von 20,15 g (57,2 mmol) des 4-Brom-N,N-dibenzylanilins in 120 ml Tetrahydrofuran wurde auf -78°C gekühlt, langsam mit 31 ml (62,9 mmol) einer 2.02 M Lösung von Hexyllithium in Hexan versetzt, 30 min nachgerührt und dann mit 15,8 ml (68,6 mmol) Triisopropylborat versetzt und noch 1 h in der Kälte nachgerührt. Die Reaktionsmischung wurde auf Raumtemperatur erwärmt, eingeengt und mit 150 ml Ethylacetat und 57 ml Wasser versetzt. Die organische Phase wurde abgetrennt, über Natriumsulfat getrocknet und eingeengt. Der erhaltene Feststoff wurde in 50 ml Hexan suspendiert, abfiltriert und mit 75 ml Ethylacetat gewaschen. Das Filtrat wurde eingeengt und der Rückstand ebenso behandelt. Man erhielt 13,05 g (14,54 mmol, 76 %) des cyclotrimeren Anhydrids der 4-(N,N-Dibenzylamino)phenylboronsäure als farblosen Feststoff.
6,28 g (7,0 mml) des trimeren 4-(N,N-Dibenzylamino)-phenylboronsäureanhydrids und 126 mg Palladium auf Aktivkohle (10 %) wurden in 50 ml salzsaurem Methanol aufgenommen und unter Wasserstoffatmosphäre (1 - 3 bar) 3 h gerührt. Der Katalysator wurde abfiltriert und das Filtrat eingeengt. Man erhielt 3,45 g (19,9 mmol, 95 %) 4-Aminophenylboronsäure-Hydrochlorid als hellbraunen Feststoff. Gesamtausbeute über drei Stufen 66 %.

### Beispiel 2

### 3-Aminophenylboronsäure durch Halogen-Metall-Austausch mittels Hexyllithium an N,N-Dibenzyl-3-bromanilin

3-Bromanilin wurde wie in Beispiel 1 für 4-Bromanilin beschrieben geschützt, umgesetzt und aufgearbeitet. Man erhielt 3-Aminophenylboronsäure in 67 %iger Gesamtausbeute.

### Beispiel 3

### 2-Aminophenylboronsäure durch Halogen-Metall-Austausch mittels Hexyllithium an N,N-Dibenzyl-2-bromanilin

2-Bromanilin wurde wie in Beispiel 1 für 4-Bromanilin beschrieben geschützt, umgesetzt und aufgearbeitet. Man erhielt 2-Aminophenylboronsäure in 64 %iger Ausbeute.

### Beispiel 4:

### 4-Aminophenylboronsäure durch Umsetzung von N,N-Dibenzyl-4-bromanilin mit elementarem Lithium

Bei -50°C wurden 655 mg (94,38 mmol) Lithium in 10 ml Tetrahydrofuran mit 16,2 g (46,0 mmol) N,N-Dibenzyl-4-bromanilin (Herstellung siehe Beispiel 1) und einer katalytischen Menge Biphenyl in 40 ml Tetrahydrofuran versetzt. Man ließ 19 h bei dieser Temperatur rühren und versetzte die resultierende Reaktionsmischung langsam unter Kühlung mit 12,7 ml (55,2 mmol) Triisopropylborat. Man ließ langsam auf Raumtemperatur erwärmen, gab Methanol zu und engte ein. Das Rohprodukt wurde verdünnt mit 150 ml Ethylacetat und 50 ml Wasser. Die organische Phase wurde abgetrennt, über Natriumsulfat getrocknet und eingeengt. Nach Umkristallisation des Rückstands aus Ethylacetat wurden 10,94 g (12,19 mmol, 79 %) des trimeren 4-(N,N-Dibenzylamino)phenylboronsäureanhydrids erhalten.
Die Abspaltung der Schutzgruppen durch Hydrogenolyse wurde wie in Beispiel 1 beschrieben durchgeführt. Die Ausbeute betrug 97 %, die Gesamtausbeute 70,5 %.

### Beispiel 5:

### 4-Aminophenylboronsäure durch Umsetzung von N,N-Dibenzyl-4-chloranilin mit elementarem Lithium

N,N-Dibenzyl-4-chloranilin wurde analog zu N,N-Dibenzyl-4-bromanilin (siehe Beispiel 1) durch Benzylierung von 4-Chloranilin mit Benzylbromid hergestellt; die Ausbeute betrug 97%.
Zu einem Gemisch von 786 mg (113 mmol) Lithium in 10 ml Tetrahydrofuran wurde bei -30°C eine Lösung von 17,0 g (55,3 mmol) N,N-Dibenzyl-4-chloranilin und einer katalytischen Menge Biphenyl in 50 ml Tetrahydrofuran gegeben und 24 h zwischen -40 und -30°C gerührt. Bei -40°C wurden 14,0 ml (60,8 mmol) Triisopropylborat zugegeben und langsam auf Raumtemperatur erwärmen gelassen. Man gab etwas Methanol zu und engte ein. Der Rückstand wurde in 150 ml Ethylacetat und 60 ml Wasser aufgenommen. Die organische Phase wurde abgetrennt, über Natriumsulfat getrocknet, eingeengt und der Rückstand in 15 ml Ethylacetat gelöst. Im Laufe von 12-15 h kristallisierten 10,65 g (11,84 mmol, 67,%) 4-(N,N-Dibenzylamino)phenylboronsäureanhydrid aus.
Die Entfernung der Schutzgruppen durch Hydrogenolyse wurde wie in Beispiel 1 beschrieben durchgeführt (93 %). Die Gesamtausbeute betrug 60 %.

### Beispiel 6:

### 3-Amino-5-trifluormethylphenylboronsäure durch Halogen-Metall-Austausch mittels Isopropylmagnesiumbromid an 3-(N,N-Dibenzylamino)-5-brombenzotrifluorid

3-(N,N-Dibenzylamino)-5-brombenzotrifluorid wurde analog zu N,N-Dibenzyl-4-bromanilin (siehe Beispiel 1) durch Benzylierung von 3-Amino-5-brombenzotrifluorid mit Benzylbromid hergestellt; die Ausbeute betrug 88 %.
6,86 g (16,3 mmol) des erhaltenen 3-(N,N-Dibenzylamino)-5-brombenzotrifluorids wurden in 20 ml Tetrahydrofuran gelöst, auf 0°C gekühlt und langsam mit 28 ml (19,6 mmol) einer ca. 0,7 M Lösung von Isopropylmagnesiumbromid in Tetrahydrofuran versetzt. Man ließ allmählich auf Raumtemperatur erwärmen und rührte noch 2 h. Dann wurde wieder auf 0°C abgekühlt und 5,1 ml (22,0 mmol) Triisopropylborat langsam zugetropft. Man ließ über Nacht bei Raumtemperatur rühren. Zur Aufarbeitung gab man etwas Methanol zum Reaktionsgemisch und engte ein. Das Rohprodukt wurde in 150 ml Ethylacetat und 50 ml halbgesättigter Ammoniumchlorid-Lösung aufgenommen, die organische Phase abgetrennt, über Natriumsulfat getrocknet und eingeengt. Der Rückstand wurde in 50 ml Hexan suspendiert und das Produkt abfiltriert, das Filtrat eingeengt und der Rückstand nochmals in wenig Hexan suspendiert und filtriert. Beide Produktfraktionen zusammen ergaben 1,73 g (3,33 mmol, 61 %) des 3-Amino-5-trifluormethylphenylboronsäureanhydrids.
Die Entfernung der Benzylgruppen wurde wie in Beispiel 1 beschrieben hydrogenolytisch durchgeführt (89 %). Die Gesamtausbeute betrug 48 %.

### Beispiel 7:

### 4-Aminophenylboronsäure durch Grignard-Reaktion an N,N-Bis(trimethylsilyl)-4-bromanilin

10,0 g (58,1 mmol) 4-Bromanilin wurden in 200 ml Triethylamin gelöst und mit 25 ml (130 mmol) Trimethylsilyltrifluormethansulfonat versetzt. Man erhitzte 8 h zum Rückfluss. Das Reaktionsgemisch wurde eingeengt und das Rohprodukt im Hochvakuum destilliert. Man erhielt 11,9 g (37,8 mmol, 65 %) N,N-Bis(trimethylsilyl)-4-bromanilin.
10,0 g (31,6 mmol) des N,N-Bis(trimethylsilyl)-4-bromanilins wurden nach und nach zu einer Suspension von 0,99 g (41,1 mmol) Magnesium in 70 ml Tetrahydrofuran dosiert, während unter Rückfluss gekocht wurde. Man kochte noch 10 h unter Rückfluss und kühlte das Reaktionsgemisch auf 0°C ab. Es wurden 9,4 ml (40,8 mmol) Triisopropylborat zu der Lösung von 4-N,N-Bis(trimethylsilyl)aminophenylmagnesiumbromid gegeben und das Gemisch über Nacht bei Raumtemperatur gerührt. Zur Abspaltung der Silylgruppen gab man 65 ml (65 mmol) einer 1 M Lösung von Tetrabutylammoniumfluorid in Tetrahydrofuran (5 % Wasser) zu und rührte 1 h nach.
Zur Aufarbeitung gab man das Reaktionsgemisch in 250 ml Wasser und 250 ml Ethylacetat, trennte die organische Phase ab, trocknete über Natriumsulfat und engte im Vakuum ein. Mehrfache Umkristallisation aus schwach salzsaurem Methanol erbrachte 1,92 g (11,1 mmol, 35 %) des 4-Aminophenylboronsäure-Hydrochlorids als braunen Feststoff (Ausbeute über beide Stufen 23 %).

### Beispiel 8:

### 4-Amino-3-methylboronsäure durch Halogen-Metall-Tausch an 4-(N,N-Bis(trimethylsilyl)amino)-3-methylbrombenzol

Die Einführung der Silylschutzgruppen wurde, ausgehend von o-Toluidin, analog zu Beispiel 5 durchgeführt. Man erhielt N,N-Bis(trimethylsilyl)-4-brom-3-methylanilin in 57 %iger Ausbeute.
5 g (30,3 mmol) der Substanz, gelöst in 60 ml Tetrahydrofuran, wurden auf -78°C gekühlt und langsam mit 19 ml (30,3 mmol) einer 1,6 M Lösung von Butyllithium in Hexan versetzt. Man ließ noch 10 min nachrühren und tropfte dann bei maximal -50°C eine Lösung von 4,72 g Trimethylborat (45,5 mmol) in 20 ml Tetrahydrofuran zu. Man ließ noch eine Stunde bei dieser Temperatur nachrühren und dann über Nacht auf Raumtemperatur erwärmen. Man hydrolysierte mit 40 ml gesättiger Kaliumfluorid-Lösung, versetzte mit 100 ml Toluol und trennte die Phasen. Die organische Phase wurde eingeengt. Der Rückstand wurde durch Umkristallisation gereinigt, und man erhielt 2,34 g (5,3 mmol, 51 %) des trimeren 4-Amino-3-methylboronsäureanhydrids als leicht bräunlichen Feststoff (Ausbeute über beide Stufen 29 %).

### Beispiel 9:

### 4-Aminophenylboronsäure durch Halogen-Metall-Austausch mittels Isopropylmagnesiumbromid an N,N-Bis(tert-butyloxycarbonyl)-4-iodanilin

5 g (15,7 mmol) N-tert-Butyloxycarbonyl-4-iodanilin (BOC-geschütztes 4-lodanilin) in 30 ml Toluol wurden bei Raumtemperatur mit einer Spatelspitze 4-Dimethylaminopyridin als Katalysator und 5,02 g (23,0 mmol) Di-tert-butyldicarbonat (BOC-Anhydrid) versetzt. Man ließ über Nacht rühren, verdünnte mit 30 ml Dichlormethan, wusch mit 20 ml 5 %iger Salzsäure, trennte die Phasen und engte die organische Phase bis zur Trockene ein. Der Rückstand wurde im Hochvakuum von Lösungsmittelresten befreit. Man erhielt das zweifach BOCgeschützte 4-lodanilin in 4,41 g (10,5 mmol, 67 %) Ausbeute.
Die gesamte Menge wurde in 25 ml THF gelöst und zu einer auf -78°C gekühlten Lösung von Lithiumtributylmagnesat in THF/Hexan (ca. 44 ml, 12,6 mmol) getropft (hergestellt aus Butylmagnesiumbromid-Lösung in THF und Butyllithium-Lösung in Hexan bei 0 C). Nach 40 min Nachrühren wurden 3,27 g (31,5 mmol) Trimethylborat langsam zugetropft. Man rührte noch 30 min bei -78°C nach und ließ dann langsam auf 0°C erwärmen. Zur Hydrolyse wurden 70 ml 2 N methanolischer Chlorwasserstoff zugegeben und 7 h gerührt. Zur Isolierung des Produkts gab man das Gemisch in 250 ml Wasser und 250 ml Toluol, extrahierte und trennte die Phasen. Die Toluolphase wurde eingeengt und das Produkt aus Methanol umkristallisiert. Man erhielt 0,64 g (3,7 mmol, 35 %) des 4-Anilinboronsäure-Hydrochlorids; zusätzlich war durch Protodeborierung eine nicht bestimmte Menge Anilin entstanden (Ausbeute über beide Stufen 23,5 %).

### Beispiel 10:

### 2-Aminophenylboronsäure durch direkte ortho-Metallierung mittels Hexyllithium an N,N-Dibenzylanilin

Eine Lösung von 10,0 g (36,58 mmol) käuflichem N,N-Dibenzylanilin und 5,5 ml (36,6 mmol) N,N,N',N'-Tetramethylethylendiamin in 100 ml Tetrahydrofuran wurde auf -78°C gekühlt, langsam mit 18,1 ml (36,6 mmol) einer 2,02 M Lösung von Hexyllithium in Hexan versetzt, 4 h bei -50°C nachgerührt und dann bei -78°C mit 9,3 ml (40 mmol) Triisopropylborat versetzt und noch 1 h in der Kälte nachgerührt. Die Reaktionsmischung wurde auf Raumtemperatur erwärmt, eingeengt und mit 100 ml Ethylacetat und 40 ml Wasser versetzt. Die organische Phase wurde abgetrennt, über Natriumsulfat getrocknet und im Vakuum eingeengt. Der erhaltene Rückstand wurde in 30 ml Hexan suspendiert, abfiltriert und mit etwas kaltem Ethylacetat gewaschen. Das Filtrat wurde eingeengt und der Rückstand ebenso behandelt. Man erhielt 9,41 g (10,49 mmol, 86 %) des cyclotrimeren Anhydrids der 4-(N,N-Dibenzylamino)phenylboronsäure als farblosen Feststoff.
Die Hydrogenolyse gemäß Beispiel 1 ergab eine Ausbeute von 92 % (Gesamtausbeute über beide Stufen 79 %).

## Patentansprüche

1. Verfahren zur Herstellung von Anilinboronsäurederivaten der Formel I, 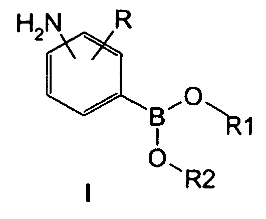 durch Überführung eines Anilins (II) durch Einführung von zwei Schutzgruppen PG in ein doppelt geschütztes Anilin (III), Metallierung von (III) und gleichzeitiger oder anschließender Umsetzung mit einem Boronsäureester B(OR^{1,2,3})₃ (IV) zu einem geschützten Anilinboronsäureester der Formel (V), der durch Abspaltung der Schutzgruppen PG in den Anilinboronsäureester der Formel (I) überführt wird, 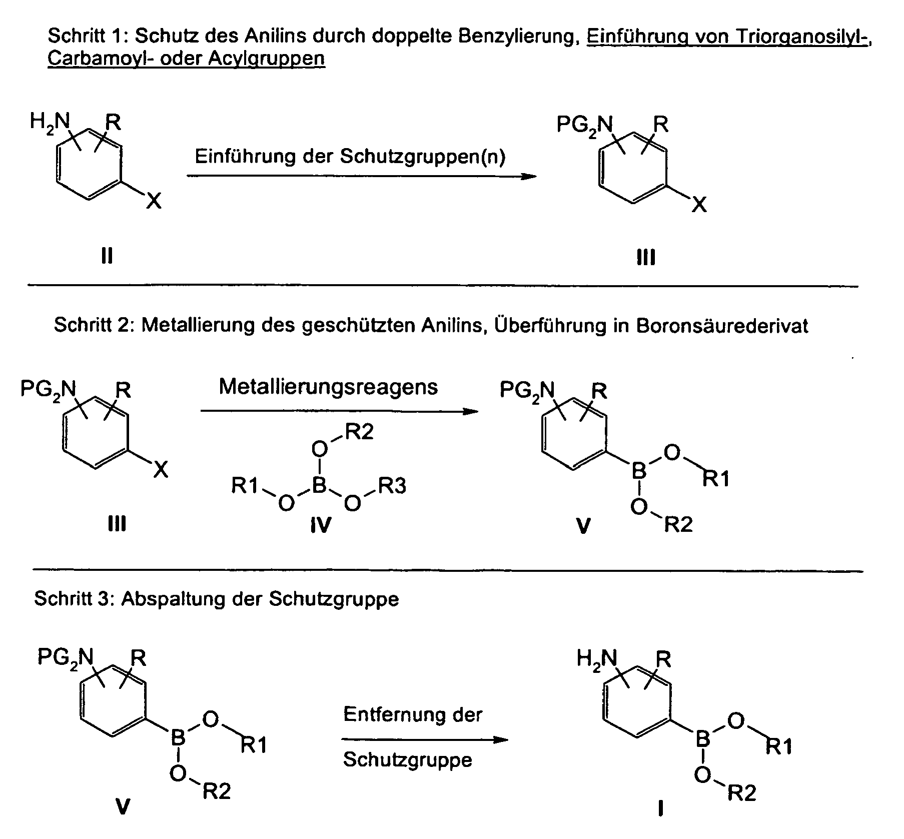 wobei
R für H, F, Cl, Br, I, einen verzweigten oder unverzweigten, gegebenenfalls substituierten C₁-C₂₀, insbesondere C₁-C₈-Alkyl- oder Alkoxyrest, einen gegebenenfalls substituierten C₆-C₁₂-Aryl- oder Aryloxyrest, einen Heteroraryl- oder Heteroaryloxyrest, einen gegebenenfalls substituierten C₃-C₈-Cycloalkylrest, eine Dialkyl- oder Diarylaminogruppe, eine Alkyl- oder Arylthiogruppe oder eine Ester- oder Acetalgruppe steht;
PG bedeutet Benzyl-, Triorganosilyl-, Carbamoyl- oder Acylgruppe;
X bedeutet H, Cl, Br, I oder F;
R¹, R², R³ stehen unabhängig voneinander für H, eine verzweigte oder unverzweigte, gegebenenfalls substituierte C₁-C₂₀ Alkylgruppe, wobei gegebenenfalls zwei Reste R¹⁻³ zusammen einem Ring bilden oder für weitere Reste B(OR)₃.

2. Verfahren nach Anspruch 1, **gekennzeichnet dadurch, dass** die Schutzgruppen PG substituierte Benzylgruppen sind, die Einführung dieser Benzylschutzgruppen durch Alkylierung des Anilin-Stickstoffatoms durch ein Alkylierungsmittel, gegebenenfalls unter Mitwirkung einer Base und/oder eines Katalysators, erfolgt.

3. Verfahren nach Anspruch 1, **gekennzeichnet dadurch, dass** wenn die Schutzgruppen PG substituierte Benzylgruppen sind, die Einführung dieser Benzylschutzgruppen durch reduktive Aminierung eines gegebenenfalls substituierten Benzaldehyds durch das Anilin (II) mit Hilfe eines Hydriddonors erfolgt.

4. Verfahren nach Anspruch 1, **gekennzeichnet dadurch, dass** wenn organische, gegebenenfalls substituierte Reste tragende Carbamoyl- oder Acylgruppen als Schutzgruppen eingesetzt werden, und diese durch Acylierung des Anilin-Stickstoffatoms mittels reaktiver Carbonsäurederivate eingeführt werden, gegebenenfalls in Gegenwart eines Acylierungskatalysators oder unter Mitwirkung einer Base oder eines Alkalimetalls.

5. Verfahren nach Anspruch 1, **gekennzeichnet dadurch, dass** wenn Triorganosilylgruppen als Schutzgruppen eingesetzt werden, diese durch Umsetzung des Anilinderivats mit einem elektrophilen Silylierungsmittel eingeführt werden, gegebenenfalls unter Mitwirkung einer Base oder eines Alkalimetalls.

6. Verfahren nach mindestens einem der vorhergehenden Ansprüche 1 bis 5, **gekennzeichnet dadurch, dass** die Entfernung der Schutzgruppen durch Hydrogenolyse in einer wasserstoffhaltigen Atmosphäre in Gegenwart eines Übergangsmetallkatalysators erfolgt, unter einem Druck von 0,5 bis 400 bar.

7. Verfahren nach mindestens einem der Ansprüche 1 bis 5, **gekennzeichnet dadurch, dass** die Entfernung der Schutzgruppen durch Transferhydrierung in Gegenwart eines Übergangsmetallkatalysators und eines geeigneten Hydriddonors oder durch eine Brönsted- oder Lewis-Säure oder Brönsted-Base erfolgt.

8. Verfahren nach mindestens einem der Ansprüche 1 bis 7, **gekennzeichnet dadurch, dass** die Darstellung des metallierten geschützten Anilinderivates (IIIa) 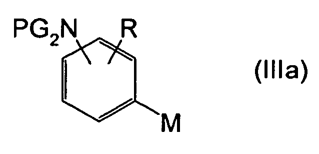 durch Umsetzung eines geschützten Haloanilinderivats mit einer Organomagnesium- oder Organolithiumverbindung erfolgt.

9. Verfahren nach mindestens einem der Ansprüche 1 bis 8, **gekennzeichnet dadurch, dass** die Darstellung des metallierten geschützten Anilinderivats (llla) 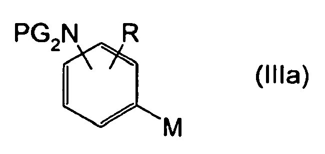 durch Umsetzung eines geschützten Haloanilinderivats mit einem reaktiven Metall aus der Gruppe: Alkalimetalle, Erdalkalimetalle, Zink, gegebenenfalls unter Mitwirkung eines Redox-Katalysators, erfolgt.

10. Verfahren nach mindestens einem der vorhergehenden Ansprüche, **gekennzeichnet dadurch, dass** die Metallierung in einem Lösungsmittel oder Lösungsmittelgemisch, dass mindestens ein Lösungsmittel aus der folgenden Gruppe enthält durchgeführt wird: Triethylamin, Diethylether, Di-n-propylether, Diisopropylether, Dibutylether, Tetrahydrofuran, 2-Methyltetrahydrofuran, tert.-Butylmethylether, Benzol, Toluol, Xylol, Anisol, Pentan, Hexan, Isohexan, Heptan, Petrolether (Alkangemische), Cyclohexan, Methylcyclohexan.

11. Verfahren nach mindestens einem der vorhergehenden Ansprüche, **gekennzeichnet dadurch, dass** das Metallierungsmittel in einem Lösemittel vorgelegt wird, dann das geschützte Anilin-Substrat zum Metallierungsmittel zudosiert wird, und anschließend das Triorganoborat (IV), gegebenenfalls in einem Lösungsmittel, mit dem Reaktionsgemisch zur Reaktion gebracht wird.

12. Verfahren nach mindestens einem der vorhergehenden Ansprüche, **gekennzeichnet dadurch, dass** das Metallierungsmittel in einem Lösungsmittel vorgelegt wird und die geschützte Anilinverbindung(III) und das Triorganoborat (IV) parallel oder als Gemisch zudosiert werden.

13. Verfahren nach mindestens einem der vorhergehenden Ansprüche, **gekennzeichnet dadurch, dass** die geschützte Anilinverbindung (III) vorgelegt wird und dann das Metallierungsmittel in einem Lösungsmittel zudosiert wird, und abschließend das Triorganoborat (IV) mit dem Reaktionsgemisch zur Reaktion gebracht wird.

14. Verfahren nach mindestens einem der vorhergehenden Ansprüche, **gekennzeichnet dadurch, dass** die geschützte Anilinverbindung (III) und das Triorganoborat (IV) vorgelegt werden und das Metallierungsmittel zudosiert wird.

15. Verfahren nach mindestens einem der vorhergehenden Ansprüche, **gekennzeichnet dadurch, dass** die geschützte Anilinverbindung (III) in einem Lösungsmittel mit einem reaktiven Metall umgesetzt wird, gegebenenfalls in Gegenwart eines Redox-Katalysators.

16. Verfahren nach mindestens einem der vorhergehenden Ansprüche, **gekennzeichnet dadurch, dass** die geschützte Anilinverbindung (III) in einem Lösungsmittel in Gegenwart des Triorganoborats (IV) mit einem reaktiven Metall aus der Gruppe: Alkalimetalle, Erdalkalimetalle, Zink, gegebenenfalls in Gegenwart eines Redox-Katalysators umgesetzt wird.

17. Verfahren nach mindestens einem der vorhergehenden Ansprüche, **gekennzeichnet dadurch, dass** das Verfahren bei einer Temperatur im Bereich von -100 bis 120°C durchgeführt wird.

18. Verfahren nach mindestens einem der vorhergehenden Ansprüche, **gekennzeichnet dadurch, dass** die Metallierung bei Verwendung von Grignard-Verbindungen im Bereich von 0°C bis 40°C und bei Verwendung von Organolithiumverbindungen bei einer Temperatur im Bereich von -100 bis -30°C durchgeführt wird.

## Claims

1. A process for preparing anilineboronic acid derivatives of the formula I 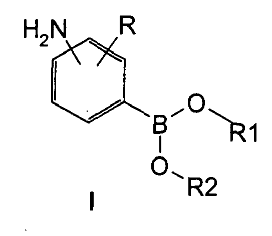 by converting an aniline (II) to a diprotected aniline (III) by introducing two protecting groups PG, metalating (III) and simultaneously or subsequently reacting with a boronic ester B(OR^{1,2,3})₃ (IV) to a protected anilineboronic ester of the formula (V), which is converted, by detaching the protecting groups PG, to the anilineboronic esters of the formula (I) 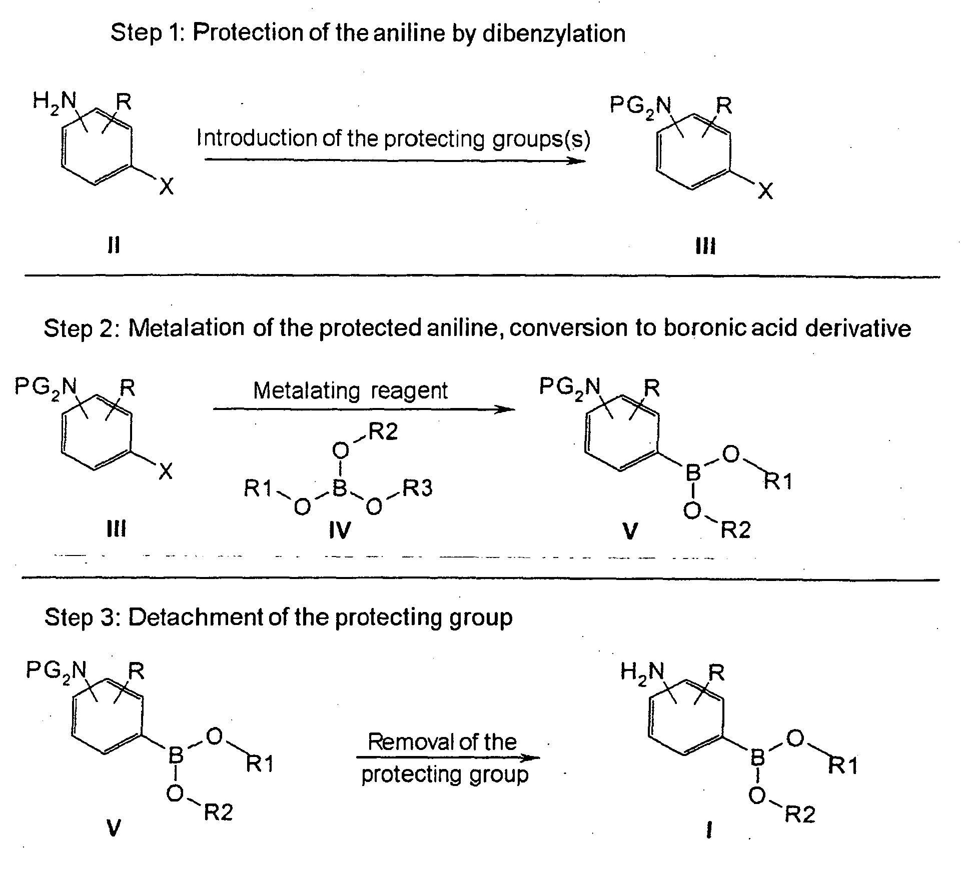 where
R is H, F, Cl, Br, I, a branched or unbranched, optionally substituted C₁-C₂₀-, in particular C₁-C₈-alkyl or -alkoxy radical, an optionally substituted C₆-C₁₂-aryl or -aryloxy radical, a heteroaryl or heteroaryloxy radical, an optionally substituted C₃-C₈-cycloalkyl radical, a dialkyl or diarylamino group, an alkyl or arylthio group, or an ester or acetal group;
PG is benzyl-, triorganosilyl-, carbamoyl- or acyl group;
X is H, Cl, Br, I or F;
R¹, R², R³ are each independently H, a branched or unbranched, optionally substituted C₁-C₂₀-alkyl group, and two R¹⁻³ radicals together may optionally form a ring, or are each further B(OR)₃ radicals.

2. The process as claimed in claim 1, wherein the protecting groups PG are substituted benzyl groups, these benzyl protecting groups being introduced by alkylating the aniline nitrogen atom with an alkylating agent, optionally also using a base and/or a catalyst.

3. The process as claimed in claim 1, wherein, when the protecting groups PG are substituted benzyl groups, these benzyl protecting groups are introduced by reductively aminating an optionally substituted benzaldehyde with the aniline (II) with the aid of a hydride donor.

4. The process as claimed in claim 1, wherein, when carbamoyl or acyl groups bearing organic, optionally substituted radicals are used as protecting groups, they are introduced by acylating the aniline nitrogen atom by means of reactive carboxylic acid derivatives, optionally in the presence of an acylation catalyst or also using a base or an alkali metal.

5. The process as claimed in claim 1, wherein, when triorganosilyl groups are used as protecting groups they are introduced by reacting the aniline derivative with an electrophilic silylating agent, optionally also using a base or an alkali metal.

6. The process as claimed in at least one of the preceding claims 1 to 5, wherein the protecting groups are removed by hydrogenolysis in a hydrogenous atmosphere in the presence of a transition metal catalyst under a pressure of from 0.5 to 400 bar.

7. The process as claimed in at least one of claims 1 to 5, wherein the protecting groups are removed by transfer hydrogenation in the presence of a transition metal catalyst and of a suitable hydride donor or by a Bronsted or Lewis acid or Brønsted base.

8. The process as claimed in at least one of claims 1 to 7, wherein the metalated protected aniline derivative (IIIa) 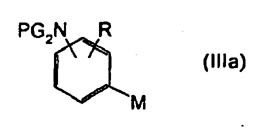 is prepared by reacting a protected haloaniline derivative with an organomagnesium or organolithium compound.

9. The process as claimed in at least one of claims 1 to 8, wherein the metalated protected aniline derivative (IIIa) 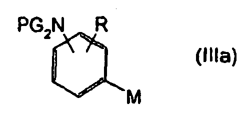 is prepared by reacting a protected haloaniline derivative with a reactive metal from the group of: alkali metals, alkaline earth metals, zinc, optionally also using a redox catalyst.

10. The process as claimed in at least one of the preceding claims, wherein the metalation is carried out in a solvent or solvent mixture which comprises at least one solvent from the following group: triethylamine, diethyl ether, di-n-propyl ether, diisopropyl ether, dibutyl ether, tetrahydrofuran, 2-methyltetrahydrofuran, tert-butyl methyl ether, benzene, toluene, xylene, anisole, pentane, hexane, isohexane, heptane, petroleum ether (alkane mixtures), cyclohexane, methylcyclohexane.

11. The process as claimed in at least one of the preceding claims, wherein the metalating agent is initially charged in a solvent, then the protected aniline substrate is metered into the metalating agent, and the triorganoborate (IV), optionally in a solvent, is subsequently reacted with the reaction mixture.

12. The process as claimed in at least one of the preceding claims, wherein the metalating agent is initially charged in a solvent and the protected aniline compound (III) and the triorganoborate (IV) are metered in in parallel or as a mixture.

13. The process as claimed in at least one of the preceding claims, wherein the protected aniline compound (III) is initially charged and then the metalating agent in a solvent is metered in, and the triorganoborate (IV) is finally reacted with the reaction mixture.

14. The process as claimed in at least one of the preceding claims, wherein the protected aniline compound (III) and the triorganoborate (IV) are initially charged and the metalating agent is metered in.

15. The process as claimed in at least one of the preceding claims, wherein the protected aniline compound (III) is reacted with a reactive metal in a solvent, optionally in the presence of a redox catalyst.

16. The process as claimed in at least one of the preceding claims, wherein the protected aniline compound (III) in a solvent is reacted in the presence of the triorganoborate (IV) with a reactive metal from the group of: alkali metals, alkaline earth metals, zinc, optionally in the presence of a redox catalyst.

17. The process as claimed in at least one of the preceding claims, which is carried out at a temperature in the range from -100 to 120°C.

18. The process as claimed in at least one of the preceding claims, wherein the metalation is carried out in the range from 0 to 40°C when Grignard compounds are used and at a temperature in the range from -100 to 30°C when organolithium compounds are used

## Revendications

1. Procédé pour la préparation de dérivés de l'acide anilinoboronique de formule I 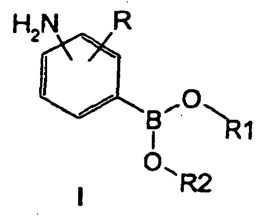 par transformation d'une aniline (II) par introduction de deux groupes protecteurs PG dans une aniline doublement protégée (III), par métallisation de (III) et par réaction simultanée ou ultérieure d'un ester de l'acide boronique B(OR^{1,2,3})₃ (IV) en un ester protégé de l'acide anilinoboronique de formule (V), qui est transformé par élimination des groupes protecteurs PG des esters de l'acide boronique de formule (I), 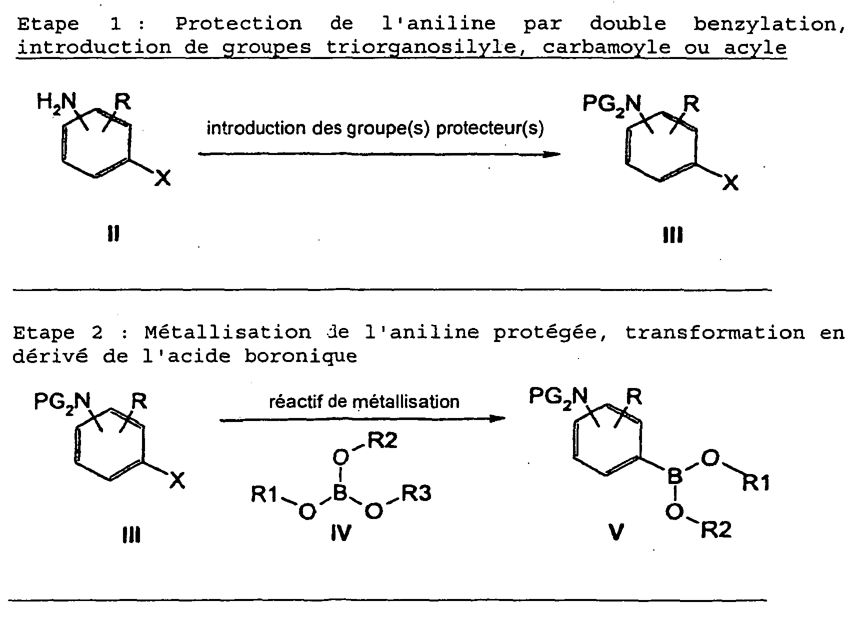 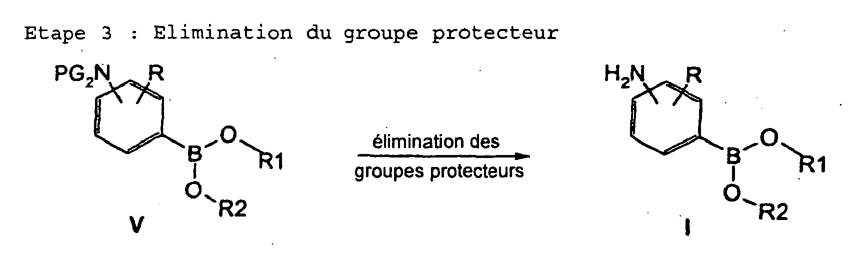 où
R représente un H, F, Cl, Br, I, un reste alkyle ou alkoxy en C₁-C₂₀ ramifié ou non ramifié, éventuellement substitué, en particulier en C₁₋C₈, un reste aryle ou aryloxy en C₆-C₁₂ éventuellement substitué, un reste hétéroaryle ou hétéroaryloxy, un reste cycloalkyle en C₃-C₈ éventuellement substitué, un groupe dialkyl- ou diarylamino, un groupe alkyl- ou arylthio ou un groupe ester ou acétal ;
PG représente un groupe benzyle, triorganosilyle, carbamoyle ou acyle ;
X représente un atome H, Cl, Br, I ou F ;
R¹, R², R³ indépendamment les uns des autres, représentent un atome d'hydrogène, un groupe alkyle en C₁-C₂₀ ramifié ou non ramifié, éventuellement substitué, éventuellement deux restes R¹⁻³ conjointement forment un cycle ou représentent d'autres restes B(OR)₃.

2. Procédé selon la revendication 1, **caractérisé en ce que** les groupes protecteurs PG sont des groupes benzyle substitués, l'introduction de ces groupes protecteurs benzyle est mise en oeuvre par alkylation de l'atome d'azote de l'aniline par un agent d'alkylation, éventuellement sous l'effet d'une base et/ou d'un catalyseur.

3. Procédé selon la revendication 1, **caractérisé en ce que** quand les groupes protecteurs PG sont des groupes benzyle substitués, l'introduction de ces groupes protecteurs benzyle est mise en oeuvre par amination réductrice d'un aldéhyde benzylique éventuellement substitué par l'aniline (II) à l'aide d'un donneur d'hydrogène.

4. Procédé selon la revendication 1, **caractérisé en ce que** quand on utilise des groupes carbamoyle ou acyle porteurs de restes organiques, éventuellement substitués, en tant que groupes protecteurs, ils sont introduits par acylation de l'atome d'azote de l'aniline à l'aide de dérivés réactifs d'acides carboxyliques, éventuellement en présence d'un catalyseur d'acylation ou sous l'effet d'une base ou d'un métal alcalin.

5. Procédé selon la revendication 1, **caractérisé en ce que** quand on utilise des groupes triorganosilyle en tant que groupes protecteurs, ils sont introduits par réaction du dérivé de l'aniline sur un agent de silylation électrophile, éventuellement sous l'effet d'une base ou d'un métal alcalin.

6. Procédé selon au moins l'une des revendications précédentes 1 à 5, **caractérisé en ce que** l'élimination des groupes protecteurs est mise en oeuvre par hydrogénolyse sous une atmosphère renfermant l'hydrogène en présence d'un catalyseur à base de métaux de transition, sous une pression de 0,5 à 400 bars.

7. Procédé selon au moins l'une des revendications 1 à 5, **caractérisé en ce que** l'élimination des groupes protecteurs est mise en oeuvre par hydrogénation de transfert en présence d'un catalyseur à base de métaux de transition et d'un donneur d'hydrogène approprié ou à l'aide d'un acide de Brönsted ou d'un acide de Lewis ou d'une base de Brönsted.

8. Procédé selon au moins l'une des revendications 1 à 7, **caractérisé en ce qu'**on prépare le dérivé de l'aniline métallisé protégé (IIIa) 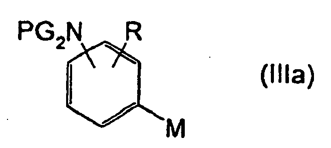 par réaction d'un dérivé protégé de l'haloaniline sur un composé organomagnésié ou organolithié.

9. Procédé selon au moins l'une des revendications 1 à 8, **caractérisé en ce qu'**on prépare le dérivé de l'aniline métallisé protégé (IIIa) 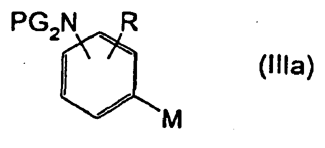 par réaction d'un dérivé protégé de l'haloaniline sur un métal réactif du groupe des métaux alcalins, des métaux alcalino-terreux, de zinc, éventuellement sous l'effet d'un catalyseur redox.

10. Procédé selon au moins l'une des revendications précédentes, **caractérisé en ce qu'**on met en oeuvre la métallisation dans solvant ou un mélange de solvant, qui renferme au moins un solvant du groupe suivant : la triéthylamine, l'éther diéthylique, l'éther di-n-propylique, l'éther diisopropylique, l'éther dibutylique, le tétrahydrofuranne, le 2-méthyltetrahydrofuranne, l'éther tert.-butylméthylique, le benzène, le toluène, le xylène, l'anisol, le pentane, l'hexane, l'isohexane, l'heptane, l'éther de pétrole (mélange d'alcanes), le cyclohexane, le méthylcyclohexane.

11. Procédé selon au moins l'une des revendications précédentes, **caractérisé en ce que** l'agent de métallisation est présent dans un solvant, puis on ajoute progressivement le substrat aniline protégé à l'agent de métallisation, et ensuite le triorganoborate (IV), éventuellement dans un solvant, en faisant réagir sur le mélange réactionnel.

12. Procédé selon au moins l'une des revendications précédentes, **caractérisé en ce que** l'agent de métallisation est placé dans un solvant et on ajoute le composé aniline protégé (III) et le triorganoborate (IV) en parallèle ou sous forme de mélange.

13. Procédé selon au moins l'une des revendications précédentes, **caractérisé en ce qu'**on place d'abord le composé aniline protégé (III) et ensuite on ajoute progressivement l'agent de métallisation dans un solvant et ensuite on fait réagir le triorganoborate (IV) sur le mélange réactionnel.

14. Procédé selon au moins l'une des revendications précédentes, **caractérisé en ce qu'**on place d'abord le composé aniline protégé (III) et le triorganoborate (IV) et ensuite on ajoute progressivement l'agent de métallisation.

15. Procédé selon au moins une des revendications précédentes, **caractérisé en ce qu'**on fait réagir le composé aniline protégé (III) dans un solvant sur un métal réactif, éventuellement en présence d'un catalyseur redox.

16. Procédé selon au moins l'une des revendications précédentes, **caractérisé en ce qu'**on fait réagir le composé aniline protégé (III) dans un solvant en présence du triorganoborate (IV) sur un métal réactif pris parmi le groupe des métaux alcalins, des métaux alcalino-terreux, de zinc, éventuellement sous l'effet d'un catalyseur redox.

17. Procédé selon au moins l'une des revendications précédentes, **caractérisé en ce que** le procédé est mis en oeuvre à une température dans le domaine de -100 à 120°C.

18. Procédé selon au moins l'une des revendications précédentes, **caractérisé en ce que** la métallisation est mise en oeuvre en utilisant des composés de Grignard dans le domaine de 0°C à 40°C et . en utilisant des composés organolithiés à une température dans le domaine de -100 à -30°C.
